# FASCICULE DE BREVET EUROPEEN

(11) **EP 0 404 704 B1**
(45) Date de publication et mention de la délivrance du brevet: **16.06.1993**
(21) Numéro de dépôt: 90440056.1
(22) Date de dépôt: 20.06.1990
(51) Int. Cl.: A01J 27/04, A01J 25/12, A23C 19/068

(54) **Procédé de fabrication de fromage à pâte pressée cuite, notamment d'emmental, de dimensions réduites**
Verfahren zum Herstellen von gepresstem Kochkäse, insbesondere von Emmentaler mit kleinen Abmessungen
Process for the production of pressed boiled cheese, e.f. Emmental, with small dimensions

(30) Priorité: 20.06.1989 FR 8908355
(43) Date de publication de la demande: 27.12.1990
(73) Titulaire: UCAFCO, F-70000 Vesoul (FR)
(72) Inventeur: Gandy, Dominique, F-70000 Vesoul (FR)
(74) Mandataire: Arbousse-Bastide, Jean-Claude Philippe

(56) Documents cités:
- FR-A- 1 544 913
- FR-A- 2 260 293
- FR-A- 2 448 287
- GB-A- 1 280 999
- US-A- 1 415 942

## Description

La présente invention a pour objet un procédé de fabrication de fromages à pâte pressée cuite de dimensions réduites.

On sait que les fromages à pâte cuite du type emmental sont fabriqués sous forme de meules de grandes dimensions, donc de poids élevé (de l'ordre de 70 kg) dont le transport et la manutention sont difficiles.

Des tentatives ont été effectuées à ce jour pour fabriquer ce type de fromage dans des dimensions moindres, par exemple selon le procédé décrit dans le document US-A-1415 942. Toutefois ces tentatives, outre les investissements élevés qu'elles ont nécessité, se sont heurtées à des problèmes techniques sans solution, en raison des difficultés qu'il y a à obtenir une répartition homogène des grains de caillé dans des moules de petit format lors des opérations de soutirage et de pressage. Il en résultait des défauts affectant à la fois la forme du fromage obtenu et sa présentation, inacceptable en raison d'une mauvaise répartition des ouvertures.

La présente invention a pour but de proposer un procédé de fabrication de fromages de type pâte pressée cuite qui permet d'obtenir des fromages de format réduit dont la qualité est comparable à celle des fromages de même type de format classique, et ce sans nécessiter d'investissement important en matériel.

La présente invention a ainsi pour objet un procédé de fabrication de fromages à pâte pressée cuite de dimensions réduites dans lequel les opérations d'emprésurage du lait, de cuisson et de soutirage, ainsi que le début du pressage du caillé sont effectuées de la manière habituelle, cette dernière opération dans des moules de grandes dimensions de type classique, d'où la pâte est assez rapidement sortie en vue d'être découpée en au moins deux morceaux dont chacun est placé dans un moule de petit format et soumis à un nouveau pressage, les opérations ultérieures de démoulage, de salage et d'affinage étant ensuite conduites de la manière habituelle dans ce type de fabrication.

Le procédé selon l'invention présente l'avantage considérable de permettre l'utilisation des moules classiques pour mener à bien les premières étapes de fabrication du fromage, ce qui résulte en une parfaite homogénéité de la pâte obtenue, avec pour conséquence une bonne répartition des ouvertures et une présentation sans défauts.

Selon une première caractéristique du procédé selon l'invention, le pressage du caillé dans le moule de grandes dimensions est limité à une durée de 1/2 h à 1 h maximum au bout de laquelle le caillé est sorti du moule et découpé en au moins deux morceaux dont chacun est placé dans un moule de petit format et soumis à un nouveau pressage : l'expérience a en effet montré que si le pressage du caillé dans le moule de grandes dimensions est prolongé au-delà d'une heure, les fromages finis présentent une forme défectueuse dite "en casquette". Il convient donc de limiter le pressage à la durée indiquée, la perméabilité de la croûte au sérum demeurant alors suffisante pour permettre une répartition homogène de l'humidité dans chaque petit fromage, avec pour conséquence une répartition optimum des ouvertures dans les fromages finis.

A ce stade du pressage, la pâte présente un pH d'environ 6,2 correspondant à un taux d'acidité du sérum d'environ 15° Dornic, et l'expérience a montré que ce taux d'acidité doit être atteint pour la bonne suite des opérations.

Dans un mode avantageux de mise en oeuvre du procédé selon l'invention, le moule de grandes dimensions est un moule carré à la sortie duquel le caillé est coupé en quatre morceaux de dimensions égales qui sont placés dans des petits moules ronds de dimensions appropriées.

Ainsi, si le grand moule carré mis en oeuvre mesure 80 cm de côté, les petits moules ronds auront de préférence un diamètre de 45 cm.

Selon une seconde caractéristique du procédé selon l'invention, le pressage du caillé dans les moules de petit format est effectué en deux temps, à savoir :
- un premier pressage d'une durée de 2 à 5 min sous une pression de l'ordre de 0,4 à 0,6 bar, visant à compléter l'égouttage et à donner sa forme au petit fromage ;
- un second pressage d'une durée de 2,5 à 3 heures sous une pression de l'ordre de 0,02 bar.

Le premier pressage du caillé dans les moules de petit format peut être réalisé au moyen d'une presse à vérin qui applique sur chaque morceau de pâte une pression relativement élevée de l'ordre de 0,4 à 0,6 bar, en vue de donner sa forme au petit fromage.

Selon un mode avantageux de mise en oeuvre du procédé selon l'invention, ce premier pressage est réalisé au moyen d'une presse à quatre vérins qui applique la pression indiquée sur chacun des quatre morceaux de caillé issus du grand moule carré et placés dans des moules ronds de petit format.

Le second pressage du caillé dans les moules de petit format peut être réalisé au moyen d'un poids appliqué pendant la durée indiquée sur chacun des morceaux de caillé placés dans lesdits moules de petit format.

Ainsi, dans le cas où les moules de petit format sont des moules ronds de 45 cm de diamètre, ce second pressage est avantageusement réalisé en plaçant sur chaque moule un poids de 30 kg également réparti sur toute la surface du caillé.

Après ce second pressage, les fromages sont retournés afin que leurs faces s'homogénéisent en température et en pH, et ils sont laissés dans leurs moules pendant environ 15 heures à une température de l'ordre de 25°C puis refroidis pendant environ 5 heures à une température d'environ 12°C.

La mise en oeuvre de petits moules ronds dont l'arête de base est arrondie permet d'obtenir à ce stade de la fabrication des fromages dont les arêtes sont arrondies sur les deux faces, ce qui confère une caractéristique avantageuse aux produits finis.

Les fromages refroidis sont ensuite, après démoulage, soumis à un salage qui s'effectue avantageusement dans un bain de saumure saturée maintenu à la même température d'environ 12°C, pendant une durée de 16 à 18 heures.

Les fromages sortant du bain de saumure sont ensuite soumis à un douchage à l'eau tiède puis à un séchage à environ 6°C pendant une durée de 3 à 4 jours, étant retournés une fois au cours de cette dernière opération.

Le séchage des fromages peut être suivi de leur affinage, toutefois il s'est révélé avantageux de conserver les petits fromages pendant quelques semaines à une température de 4 à 8°C sous film de report, préalablement à leur affinage, ce report améliorant leurs qualités organoleptiques.

La mise sous film de report des petits fromages peut s'effectuer de manière connue en plaçant chaque fromage dans un sac d'une matière plastique appropriée qui est soudé sous vide, puis en immergeant les fromages pendant environ 10 secondes dans un bain d'eau chaude à environ 90°C de manière à faire adhérer le film au fromage. Cette dernière opération a pour effet avantageux de faire migrer sur la croûte du fromage une partie des matières grasses qu'il renferme, résultant en la formation à sa surface d'une pellicule de matière grasse bactériostatique.

A l'issue du temps de report, l'enlèvement du film de report doit être suivi d'une opération de recroûtage du fromage, laquelle peut s'effectuer en laissant les fromages pendant 5 à 7 jours à environ 15°C en atmosphère humide de taux d'hygrométrie voisin de 75 %.

Les fromages ainsi recroûtés peuvent être ensuite affinés, l'affinage étant de préférence réalisé à une température de l'ordre de 22°C pendant une durée de 3 à 4 semaines, en atmosphère humide de taux d'hygrométrie voisin de 72 %.

L'exemple qui suit illustre un mode de réalisation de la présente invention, étant bien entendu qu'il ne présente vis-à-vis d'elle aucun caractère limitatif.

### EXEMPLE

Du lait cru ou thermisé est réchauffé dans une cuve à une température de 28 à 32°C, puis ensemencé en ferments lactiques mésophiles et thermophiles. Après un temps de maturation de 45 minutes, il est emprésuré avec une présure concentrée liquide du commerce.

Au bout d'environ 40 minutes le lait, qui s'est transformé en un gel, est découpé en petits morceaux et l'ensemble caillé-sérum est chauffé à 53°C en l'espace de 30 minutes, puis soumis à un brassage pendant environ 45 minutes. Après soutirage, le moulage est effectué dans des moules carrés de 80 cm de côté et il est suivi d'un pressage pneumatique appliquant à la surface du caillé un poids de 750 kg pendant 1/2 heure.

Au bout de ce laps de temps le pressage est interrompu et la pâte découpée en 4 morceaux qui sont chacun placés dans un moule rond entoilé de 45 cm de diamètre. Une mesure d'acidité effectuée à ce stade sur le sérum indique un taux d'acidité de 15° Dornic.

Le caillé est alors soumis à un premier pressage d'une durée de 5 minutes, réalisé à l'aide d'une presse à 4 vérins appliquant sur chacun des quatre morceaux de caillé un poids de 800 kg.

Ce premier pressage est suivi d'un second pressage réalisé à l'aide de poids de 30 kg placés sur chaque morceau de caillé pendant environ 3 heures, après quoi le poids est enlevé et le fromage retourné dans le moule, qui présente avantageusement une arête arrondie.

Les moules sont ensuite laissés environ 15 heures à une température de l'ordre de 25°C, puis refroidis à environ 12°C pendant une durée d'environ 5 heures, après quoi les fromages sont démoulés et plongés dans un bain de saumure saturée maintenue à la même température d'environ 12°C, où ils sont laissés pendant 16 à 18 heures.

A la sortie du bain de saumure, les fromages sont douchés à l'eau tiède puis séchés sous froid ventilé d'environ 6°C pendant 4 jours, étant retournés une fois au cours de ce séchage.

Après séchage, les fromages sont mis sous film de report et conservés pendant 6 à 7 semaines à une température de 6°C avant d'être débarrassés du film, recroûtés à 15°C pendant 6 jours sous 75 % d'humidité et soumis à l'affinage proprement dit, lequel est réalisé à 22,5°C, sous 72 % d'humidité, pendant 3 à 4 semaines.

Les fromages ainsi obtenus présentent toutes les qualités requises de présentation et de répartition des ouvertures, ainsi que d'excellentes qualités organoleptiques.

## Revendications

1. Procédé de fabrication de fromage à pâte pressée cuite, notamment d'emmental, de dimensions réduites, comprenant les étapes successives habituelles d'emprésurage du lait, de cuisson, de soutirage, de pressage, de salage et d'affinage, dans lequel les opérations d'emprésurage, de cuisson et de soutirage sont effectuées de la manière habituelle, et sont suivies d'un pressage partiel du caillé dans un moule classique de grandes dimensions, puis du démoulage de la pâte et du découpage de cette dernière en au moins deux morceaux qui sont placés chacun dans un moule de format réduit et soumis à un pressage complémentaire, caractérisé en ce que le pressage partiel du caillé dans le moule de grandes dimensions est limité à une durée de 1/2 heure à 1 heure et en ce que le pressage complémentaire est réalisé en deux temps, à savoir :
- un premier pressage d'une durée de 2 à 5 minutes sous une pression élevée de l'ordre de 0,4 à 0,6 bar, ce premier pressage visant à compléter l'égouttage et à donner sa forme au fromage ;
- un second pressage d'une durée de 2,5 à 3 heures sous une pression de l'ordre de 0,02 bar.

2. Procédé selon la revendication 1, caractérisé en ce que le moule de grandes dimensions mis en oeuvre est un moule carré et en ce que la pâte est découpée en quatre morceaux de dimensions égales qui sont placés dans des moules ronds de format réduit.

3. Procédé selon la revendication 2, caractérisé en ce que le grand moule carré a environ 80 cm de côté et les petits moules ronds environ 45 cm de diamètre.

4. Procédé selon l'une quelconque des revendications précédentes, caractérisé en ce que le salage des petits fromages est réalisé par immersion dans un bain de saumure saturée maintenu à environ 12°C, pendant une durée de 16 à 18 heures.

5. Procédé selon l'une quelconque des revendications précédentes, caractérisé en ce que préalablement à l'affinage les fromages sont conservés pendant quelques semaines sous film de report à une température de 4 à 8°C.

6. Procédé selon la revendication 5, caractérisé en ce qu'après enlèvement du film de report les fromages sont recroûtés à environ 15°C pendant 5 à 7 jours, en atmosphère humide de taux d'hygrométrie voisin de 75%.

7. Procédé selon l'une quelconque des revendications précédentes, caractérisé en ce que l'affinage des fromages est réalisé à une température voisine de 22°C pendant une durée de 3 à 4 semaines, en atmosphère humide de taux d'hygrométrie voisin de 72 %.

## Patentansprüche

1. Verfahren zur Herstellung von Käse aus gepreßter und gekochter Käsemasse - insbesondere Emmentaler Käse - mit geringeren Abmessungen, das die üblichen Herstellungsschritte Fermentieren, Kochen, Abfüllen, Pressen, Salzen und Reifen beinhaltet, wobei die Schritte Fermentieren, Kochen und Abfüllen auf die gewöhnliche Weise erfolgen, das Pressen jedoch teilweise in einer herkömmlichen großen Form geschieht, wonach er aus der Form genommen und in mindestens zwei Teile geschnitten wird, welche jeweils in eine kleinere Form gelegt werden und zum zweiten Mal gepreßt werden, dadurch gekennzeichnet, daß das erste Pressen in der großen Form nicht länger als eine halbe bis eine Stunde dauert und das zweite Pressen in folgenden zwei Schritten erfolgt:
- Vorpressen während einer Dauer von zwei bis fünf Minuten unter einem relativ hohem Druck von 0,4 - 0,6 bar zum zusätzlichen Auspressen von Wasser und Formen des Käses,
- Nachpressen während einer Dauer von 2,5 - 3 Stunden bei einem Druck von ca. 0,02 bar.

2. Verfahren nach Patentanspruch 1, dadurch gekennzeichnet, daß die zum ersten Pressen verwendte große Form quadratisch ist und der Käse in vier Teile gleicher Größe geschnitten wird, welche jeweils in kleinere runde Formen gelegt werden.

3. Verfahren nach Patentanspruch 2, dadurch gekennzeichnet, daß die zum ersten Pressen verwendte große Form ca. 80 cm Seitenlänge und die kleinen runden Formen ca. 45 cm Durchmesser besitzen.

4. Verfahren nach einem beliebigen der vorstehenden Patentansprüche, dadurch gekennzeichnet, daß das Salzen der kleinen Käse durch Eintauchen in eine bei ca. 12 °C gehaltene gesättigte Salzlauge während einer Dauer von 16 bis 18 Stunden erfolgt.

5. Verfahren nach einem beliebigen der vorstehenden Patentansprüche, dadurch gekennzeichnet, daß die Käse vor dem Reifen einige Wochen lang unter einer Abziehfolie bei einer Temperatur von 4-8 °C gelagert werden.

6. Verfahren nach Patentanspruch 5, dadurch gekennzeichnet, daß der Käse nach dem Abziehen der Folie 5 - 7 Tage lang bei ca. 15 °C in einer Atmosphäre mit ca. 75 % rel. Luftfeuchtigkeit zur Krustenbildung lagert.

7. Verfahren nach einem beliebigen der vorstehenden Patentansprüche, dadurch gekennzeichnet, daß das Reifen des Käses bei einer Temperatur von ca. 22 °C während einer Dauer von 3 - 4 Wochen in einer Atmosphäre mit ca. 72 % rel. Luftfeuchtigkeit erfolgt.

## Claims

1. Method for producing cooked pressed paste cheese, especially gruyère cheese, with reduced dimensions, said method including the usual successive stages of milk added pressuring, baking, drawing off, pressing, salting and maturing in which the adding pressure, baking and drawing off operations are effected conventionally and are followed by a partial pressing of the curd in a large conventional mould followed by removal of the paste from the mould and cutting of said paste into at least two portions each placed in a smaller mould and subjected to an additional pressing, wherein the partial pressing of the curd in the large mould is limited to a period of 1/2 an hour to 1 hour and wherein the additional pressing is carried out twice, namely :
- one first pressing for a period of between 2 and 5 minutes under a high pressure of between about 0.4 and 0.6 bars, this first pressing being intended to complete draining and provide the cheese with its shape,
- one second pressing for a period of between 2.5 and 3 hours under a pressure of about 0.02 bars.

2. Method according to claim 1, wherein the large mould used is a square mould and wherein the paste is cut into four portions with equal dimensions and placed in round smaller moulds.

3. Method according to claim 2, wherein the large square mould has a dimension of about 80 cm sideways and the small round moulds have a diameter of about 45 cm.

4. Method according to any one of the preceding claims, wherein the salting of the small cheese is embodied by immersion in a saturated pickle bath kept at a temperature of about 12°C for between 16 and 18 hours.

5. Method according to any one of the preceding claims, wherein prior to maturing, the cheeses are preserved for several weeks under a transfer film at a temperature of between 4 and 8°C.

6. Method according to claim 5, wherein, after the transfer film has been removed, the cheeses are allowed to have their rinds form again at about 15°C for between 5 and 7 days in a humid atmosphere with a hygrometrical degree of about 75%.

7. Method according to any one of the preceding claims, wherein the maturing of the cheeses is embodied at a temperature of close to 22°C for a period of between 3 and 4 weeks in a humid atmosphere with a hygrometrical degree of close to 72%.
